# EUROPEAN PATENT SPECIFICATION

(11) **EP 0 477 966 B1**
(45) Date of publication and mention of the grant of the patent: **06.12.1995**
(21) Application number: 91116538.9
(22) Date of filing: 27.09.1991
(51) Int. Cl.: B01D 63/02, A61M 1/18

(54) **Hollow fiber mass transfer apparatus**
Hohlfaser-Stoffaustauschvorrichtung
Appareil de transfert de masse à fibres creuses

(30) Priority: 27.09.1990 JP 255056/90; 02.04.1991 JP 94858/91
(43) Date of publication of application: 01.04.1992
(73) Proprietor: TERUMO KABUSHIKI KAISHA, Tokyo 151 (JP)
(72) Inventor: Watanabe, Tsuyoshi, Fujinomiya-shi, Shizuoka-ken (JP); Sanda, Tetsuya, Fujinomiya-shi, Shizuoka-ken (JP)
(74) Representative: Casalonga, Axel

(56) References cited:
- EP-A- 0 001 736
- EP-A- 0 181 470
- EP-A- 0 222 032
- DE-A- 3 144 552
- DE-A- 3 144 553
- DE-A- 3 711 695
- US-A- 3 882 024

## Description

This invention relates to a hollow fiber mass transfer apparatus for use in, for example, dialysis, ultrafiltration, membrane filtration, reverse osmosis, gas-gas isolation, gas-liquid isolation, liquid-liquid isolation, solid-liquid isolation.

A hollow fiber mass transfer apparatus is disclosed in, for example, Published Examined Japanese Patent Application No. 63-52522 and has a casing in which a bundle of hollow fibers is arranged. The bundle of the hollow fibers has its both opposite ends respectively held by partition members made of synthetic high polymer material and secured to both opposite ends of the casing. The openings of the hollow fibers open at the outer surfaces of the partition members. Further, funnel-like headers are mounted on the opposite ends of the casing, for surrounding all the openings of the hollow fibers. That is, each header defines a space with each partition member therebetween. The headers each have a large-diameter portion connected to a corresponding end of the casing, and a small-diameter portion to be connected to a first mass (e.g. blood) circulation circuit. The casing has connecting portions to be connected to a second mass (e.g. dialyzing fluid) circulation circuit communicating with a space defined between the partition members, around the hollow fibers.

In the prior art apparatus, however, there may occur a deflected flow and stay of the first mass in the header, thereby causing precipitations or deposits in the header. In particular, if the first mass is blood, a thrombus may grow in a portion of the header in which the stay of the first mass occurs.

A deflected flow and stay of the first mass as described above is conspicuously found in a header in which the first mass circulation path is deflected from the axis of the header.

DE-A-3 711 695 and DE-A-3 144 552 disclose hollow fiber apparatus for the treatment of blood, having inlet headers presenting a shape such that the flow does not separate from the inner surface of the header, in order to avoid the formation of thrombus.

EP-A-0 001 736 describes a hollow fiber dialysis apparatus comprising a funnel-shaped inlet port consisting of a cup portion and a pipe portion. Said pipe portion being long enough to prevent blood from flowing in a direction deviating from the axis of the housing.

It is therefore an object of the invention to provide a hollow fiber mass transfer apparatus which is free from such a deflected flow or stay of the first mass and hence exhibits a good mass treatment performance, without accompanying the formation of precipitates or deposits.

According to the present invention, there is provided a hollow fiber mass transfer apparatus comprising: a casing having first and second end portions; a bundle of hollow fibers housed in the casing; first and second partition members holding the hollow fiber bundle at the first and second end portions of the casing, respectively, such that openings of the hollow fibers open at each of the outer end surfaces of the members. A first funnel-like header fitted over the first end of the casing to surround all the openings of the hollow fibers at the first end of the casing, comprises a first mass inlet port of a smaller diameter and a fitting portion of a larger diameter. The lower end of said fitting portion abuts against the first partition member. A second funnel-like header fitted over the second end of the casing to surround all the openings of the hollow fibers at the second end of the casing, comprises a first mass outlet port of a smaller diameter and a fitting portion of a larger diameter. The lower end of said latter fitting portion abuts against the second partition member. Inlet and outlet means for a second mass are provided on the casing in communication with a space around the hollow fibers. Said first mass inlet port has a frusto-conical inner surface and the condition 0.8 ≦ H,D≦ 1.2 is satisfied, where D represents the inner diameter of the fitting portion of the first header, and H represents the height between the lower end of the fitting portion and the tip end of the first mass inlet port of the first header. The route along the header height (H) which controls mass, introduced into the header, to flow in the axial direction thereof has a length such that said axial flow is free from the deflected flow or stay of the mass, and the inner surface of the first header has a tapered inner surface having a gradient ϑ falling within a range of 1° to 7°, said tapered inner surface being connected to the frusto-conical surface of the first mass inlet port by a radiused portion bent outwardly.

In a preferred embodiment, the vertical angle (φ) of the frusto-conical surface is 18° to 22°.

This invention can be more fully understood from the following detailed description when taken in conjunction with the accompanying drawings, in which:
Fig. 1 is a sectional view of an artificial kidney according to the invention;
Fig. 2 is a sectional view, showing the shape of a header according to the invention;
Fig. 3 is a circuit diagram, showing the experiment carried out in order to determine the shape of the header of Fig. 2;
Figs. 4A and 4B are views for explaining how the blood flows through the header when H/D is equal to 0.7;
Figs. 5A and 5B are views for explaining how the blood flows through the header when H/D is equal to 0.8;
Figs. 6A and 6B are views for explaining how the blood flows through the header when H/D is equal to 0.9;
Figs. 7A and 7B are views for explaining how the blood flows through the header when H/D is equal to 1.0;
Figs. 8A and 8B are views for explaining how the blood flows through the header when H/D is equal to 1.1;
Figs. 9A and 9B are views for explaining how the blood flows through the header when H/D is equal to 1.2; and
Figs. 10A and 10B are views for explaining how the blood flows through the header when H/D is equal to 1.3.

The present invention will be described in more detail with reference to the accompanying drawings.

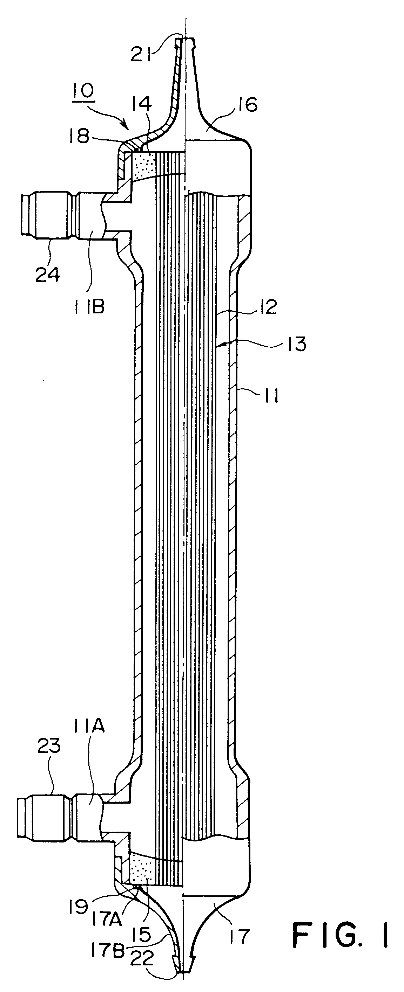

Fig. 1 shows an artificial kidney 10 to which the present invention is applied. The kidney 10 comprises a generally hollow cylindrical casing 11, in which a bundle 13 of hollow fibers 12 are housed. The bundle 13 is held at its both end portions by partition members 14 and 15 set at the both end portions of the casing 11. The partitions 14 and 15 are made according to a conventional method by pouring a potting resin into both opposite end portions of the casing 11 and hardening it.

The partition members 14 and 15 hold the fiber bundle 13 such that opposite open ends of each hollow fiber open to the external end surfaces of the members 14 and 15.

Funnel-like headers 16 and 17 are fitted over the both opposite ends of the casing 11 by bonding or screwing, through sealing members 18 and 19 such as O-rings set in the recessed portions of the headers, respectively. The headers 16 and 17 have fitting portions 16A and 17A, respectively, the ends of which abut against the partition members 14 and 15, respectively. The headers 16 and 17 surround all the open ends of the hollow fibers 12 at the opposite ends of the casing 11, respectively.

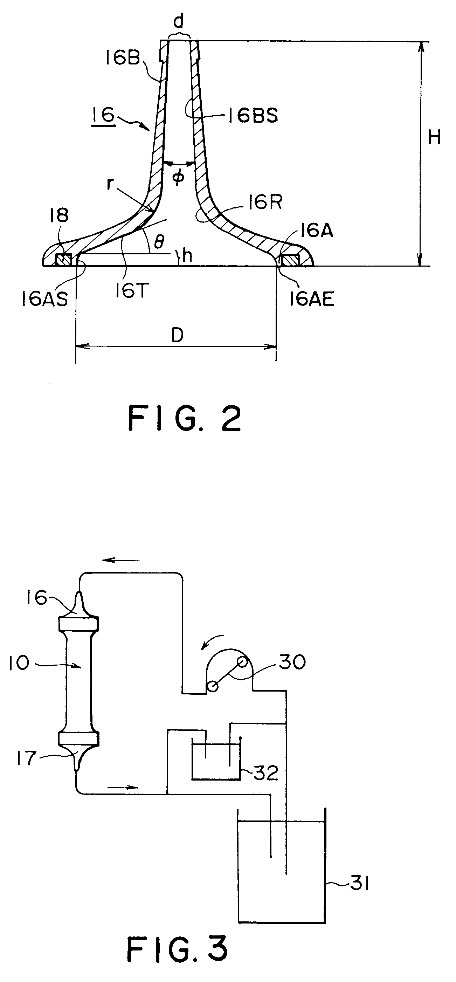

More specifically, as shown in Fig. 2, the header 16 has a fitting portion 16A of a large diameter having an inner surface 16AS, with the lower end 16AE of the portion 16A abutting against the partition member 14 as shown in Fig. 1, and a frusto-conical portion 16B of a smaller diameter. The height h of the fitting portion 16A is, usually, 2 to 5 mm. The portion 16B constitutes a blood inlet port 21 (see Fig.1), to which a blood circulation circuit is to be connected, and the blood from the blood circulation circuit is introduced therefrom to flow through the interior of each hollow fiber 12. The inner diameter d of the portion 16B at the tip end thereof is, usually 3 to 5 mm.

Moreover, as seen from Fig. 2, the inner surface of the header 16 is constituted by the inner surface 16AS of the portion 16A, a tapered surface 16T continuous with the inner surface 16AS, and the frusto-conical inner surface 16BS of the portion 16B, with an intermediate radiused surface 16R having a radius of curvature r which connects the tapered surface 16T and the frusto-conical surface 16BS.

In accordance with the present invention, the ratio H/D is set at 0.8 to 1.2, where H denotes the distance or height of the header 16 from the tip end of the portion 16B to the lower end 16AE of the portion 16A, and D denotes the inner diameter of the portion 16A. The inner diameter D is, usually, 25 to 60 mm.

In a more preferred embodiment, the gradient ϑ of the tapered surface 16T is set at 1° to 7°, more preferably 2.5° to 5° and most preferably about 3° and the vertical angle φ of the frusto-conical surface 16BS is 18° to 22°.

Turning to Fig. 1, the header 17 also has a similar fitting portion 17A of a larger diameter, and a frustoconical portion 17B of a smaller diameter. The portion 17B constitutes a blood outlet port 22 for allowing blood which has passed through the hollow fibers 12 to return to the blood circulating circuit. It is not necessary to subject the structure of the header 17 to the conditions set forth above with respect to the header 16, though the header 17 may have the same structure as the header 16.

Further, a dialyzing fluid inlet port 23 is provided at that connecting portion 11A of the casing 11 which is located near the partition member 15, and communicates with the space surrounding the hollow fibers 12 within the casing 11. A dialyzing fluid outlet port 24 is provided at that connecting portion 11B of the casing 11 which is located near the partition member 14, and communicates with the space surrounding the hollow fibers12.

That is, in the artificial kidney 10, blood flows from the blood inlet port 21 to the blood outlet port 22, and the dialyzing fluid flows from the dialyzing fluid inlet port 23 to the outlet 24. In this state, mass transfer occurs through the hollow fibers 12 each consisting of a semipermeable membrane.

The casing 11 and headers 16 and 17 are made of, e.g., hard synthetic resin such as polypropylene or polycarbonate.

The partition members 14 and 15 are made of, e.g., synthetic resin such as polyurethane or silicone.

The hollow fiber 12 is made of, e.g., regenerated cellulose in the case of an artificial kidney, while it is made of, e.g., polypropylene in the case of an artificial lung. The fiber, i.e., the semipermeable membrane has an inner diameter of approx. 200 »m, and a thickness of approx. 9 - 15 »m. The bundle 13 consists of, for example, 500 - 15,000 hollow fibers 12.

### Experiment 1

The present inventor has conducted experiments to obtain an artificial kidney exhibiting a good blood treatment performance by preventing deflected flow or stay of the blood in the header 16, thereby avoiding growth of a thrombus. The experiments were carried out by using an artificial kidney of a shape as shown in Fig. 1. Specifically, as shown in Fig. 2, the inner surface of the header 16 consists of a tapered portion 16T extending from the inner surface 16AS of the large-diameter fitting portion 16A, an intermediate portion extending from the tapered portion and bent outwardly with a predetermined curvature, and a frusto-conical portion 16BS extending substantially straight from the intermediate portion. The inner diameter D of the large-diameter portion 16A and the distance H between the large-diameter portion 16A and small-diameter portion 16B were varied in the experiments.

A blood-circulation circuit was connected to the headers 16 and 17 of the artificial kidney 10, as is shown in Fig. 3. In the figure, reference numeral 30 designates a pump, reference numeral 31 a cattle blood container, and reference numeral 32 a physiological saline solution container.

Circulation of cattle blood was performed using seven types of headers as shown in Table 1, and under the conditions shown in Table 2. The degree of growth of a thrombus in the header 16 was measured.

**TABLE 1**

| HEADER SIZE | | | |
|---|---|---|---|
| No. | HEIGHT H/INNER DIAMETER D | HEIGHT | INNER DIAMETER |
| 1 | 0.7(0.701) | 23.5 mm | 33.5 mm |
| 2 | 0.8(0.806) | 27.0 | 33.5 |
| 3 | 0.9(0.896) | 30.0 | 33.5 |
| 4 | 1.0(1.045) | 35.0 | 33.5 |
| 5 | 1.1(1.104) | 37.0 | 33.5 |
| 6 | 1.2(1.194) | 40.4 | 33.5 |
| 7 | 1.3(1.314) | 44.0 | 33.5 |

**TABLE 2**

| CATTLE BLOOD CIRCULATION TEST CONDITIONS | |
|---|---|
| CATTLE BLOOD HEMATORCRIT VALUE | 29.2% |
| ADDED AMOUNT OF HEPARIN | 3,000 IU/ℓ |
| TEMPERATURE | 36 ± 2°C |
| FLOW RATE | 200 ± 4 mℓ/min |

First, cattle blood was circulated for two hours through the blood-circulation circuit and a sample of the artificial kidney 10, using a header No. 1 shown in Table 1, which had been filled with a physiological saline solution. Then, the cattle blood was returned to the container by means of the saline solution.

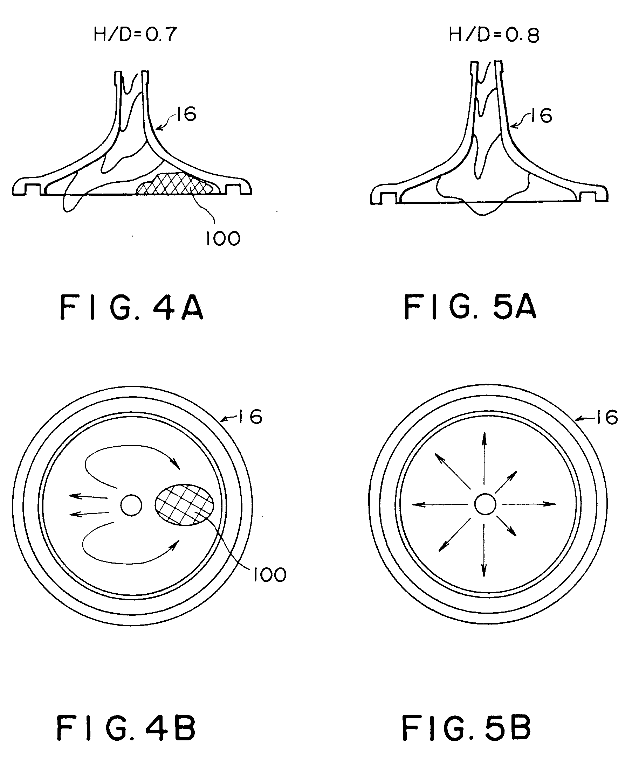

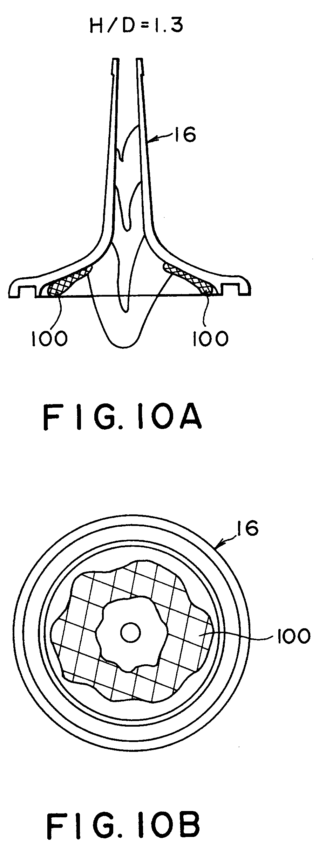

This was also done with headers No. 2 - No. 7 shown in Table 1, respectively. As a result, it was found that a white thrombus grew in the headers No. 1 and No. 7 (see Figs. 4 and 10).

In light of the experiences so far, it is considered that a thrombus will grow after approx. two-hour circulation of cattle blood if there is a blood stay portion in the header 16, and that a further thrombus will not grow even if the blood circulation is continued over five hours, since the activity of the blood is lost in this case.

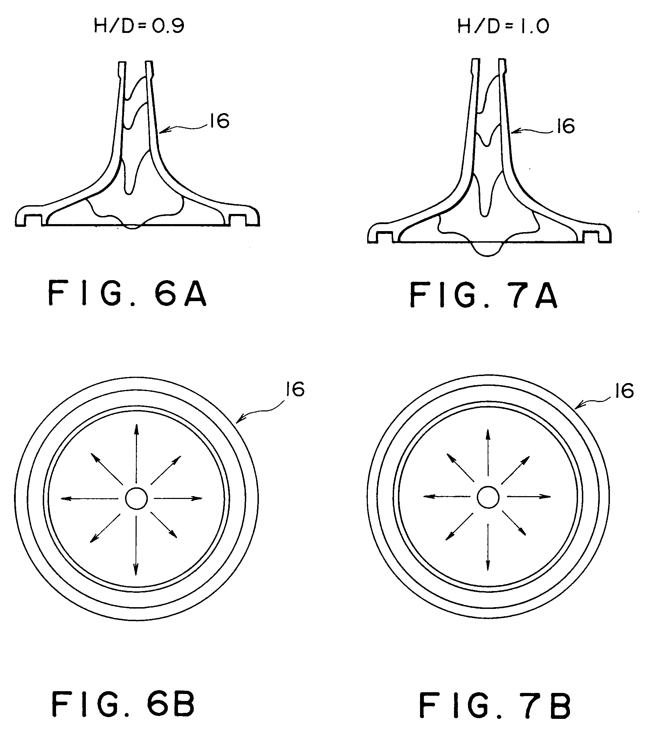

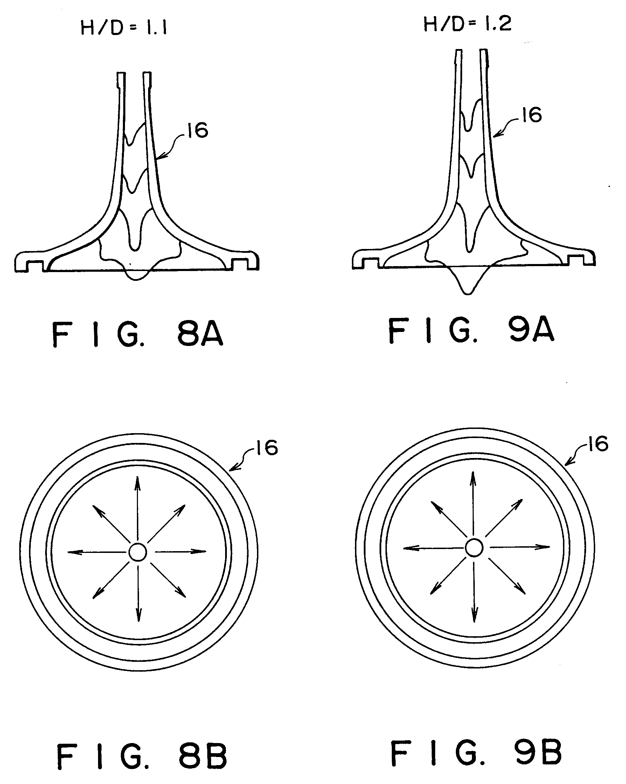

The inventor obtained the following knowledge i) - iii) from the above experiments:
i) As is shown in Fig. 4 directed to the case of H/D = 0.7, if H/D < 0.8, that route along the header height (particularly along the substantially straight portion 16B) which controls blood, introduced into the header, to flow in the axial direction thereof is relatively short. Thus, the blood cannot make a straight flow along the axis in the header 16, i.e., the center of the flow will be deflected from the axis, which may cause a blood stay portion 100 along the inner periphery of the large-diameter portion 16A, thereby causing a thrombus.
ii) As is shown in Fig. 10 directed to the case of H/D = 1.3, if H/D > 1.2, that route along the header height (particularly along the substantially straight portion 16B) which controls blood; introduced into the header, to flow in the axial direction thereof is relatively long. Thus, the blood will make a long straight flow along the axis in the header 16, resulting in that the flow of the blood at the center of the header is larger than that along the periphery thereof. Thus, a blood stay portion 100 may extend along the overall inner periphery of the large-diameter portion 16A, causing a thrombus.
iii) As is shown in Figs. 5 - 9 directed to the cases of H/D = 0.8, 0.9, 1.0, 1.1, and 1.2, respectively, if 0.8 ≦ H/D ≦ 1.2, that route along the header height (particularly along the substantially straight portion 16B) which controls blood, introduced into the header, to flow in the axial direction thereof has an appropriate length (preferably, 0.9 ≦ H/D ≦ 1.1). Thus, the blood will form an appropriate straight flow along the axis in the header 16, which does not cause deflected flow of the blood or stay thereof, being free from a blood stay portion 100, and hence a thrombus. Consequently, the header constructed as above provides a good blood treatment performance.
Further, the present inventor conducted similar experiments, by using the headers shown in Table 3 below (experiment 23 is in accordance with the present invention). The cattle blood was flown under the conditions specified in Table 4 below with the results shown in Table 5. The blood circulation time limit is the point at which the initial value of PBi (the pressure at the blood inlet side) is lowered by 6650 Pa (50 mmHg).

**Table 3**

| | φ | ϑ | r | H/D |
|---|---|---|---|---|
| No. 21 | 18 | 8 | 20 | 1.0 |
| No. 22 | 18 | 13 | 12 | 1.0 |
| No. 23 | 20 | 4 | 7 | 1.0 |
| No. 24 | 10 | 14 | 4 | 1.0 |

**Table 4**

| | |
|---|---|
| CATTLE BLOOD HEMATOCRIT VALUE | 30.2% |
| ADDED AMOUNT OF HEPARIN | 3,000 U/ℓ |
| TEMPERATURE | 37 ± 2°C |
| FLOW RATE | 200 ± 4 mℓ/min |

**Table 5**

| | Blood circulation Time (min.) | State of thrombus |
|---|---|---|
| No. 21 | 246 | △ |
| No. 22 | 204 | △ |
| No. 23 | 300 | ○ |
| No. 24 | 186 | △ |
| ○ ... Adhesion of Small amount of white thrombus △ ... Growth of white thrombus X ... Growth of white thrombus on the entire open ends of the hollow fibers | | |

From the second experiments, the following knowledges iv) - vi) were obtained.
iv) With φ of 18 to 22 degrees, the blood can flow along the frusto-conical inner surface of the header 16 with uniform spreading toward the large opening into the hollow fibers.
v) With ϑ of 1 to 7 degrees, the linear speed of the blood at the peripheral portion can be increased, with the result that the blood can flow into the hollow fibers without lowering flow rate of the blood at the peripheral portion.
vi) When the frusto-conical surface and the tapered portion 16T are extrapolated by the radiused portion 16R at the maximum radius of curvature r, the blood can flow more smoothly within the header 16 without deflected flow or stay of flow of the blood.

As described above, the hollow fiber mass transfer apparatus of the invention can provide a good mass treatment performance by preventing deflected flow or stay of first mass introduced into the header, thereby preventing occurrence of any deposits.

## Claims

1. A hollow fiber mass transfer apparatus comprising a casing (11) having first and second end portions; a bundle (13) of hollow fibers (12) housed in the casing; first and second partition members (14, 15) holding the hollow fiber bundle (13) at the first and second end portions of the casing, respectively, such that openings of the hollow fibers (12) open at each of the outer end surfaces of the members; a first funnel-like header (16) fitted over the first end of the casing to surround all the openings of the hollow fibers at the first end of the casing, and comprising a first mass inlet port (16B) of a smaller diameter and a fitting portion (16A) of a larger diameter, the lower end (16AE) of which abuts against the first partition member (14); a second funnel-like header (17) fitted over the second end of the casing to surround all the openings of the hollow fibers at the second end of the casing, and comprising a first mass outlet port (17B) of a smaller diameter and a fitting portion (17A) of a larger diameter, the lower end of which abuts against the second partition member; and inlet and outlet means (23, 24) for a second mass, provided on the casing in communication with a space around the hollow fibers; wherein said first mass inlet port has a frusto-conical inner surface (16BS), wherein the condition 0.8 ≦ H/D≦ 1.2 is satisfied, where D represents the inner diameter of the fitting portion (16A) of the first header (16), and H represents the height between the lower end (16AE) of the fitting portion and the tip end of the first mass inlet port (16B) of the first header (16), wherein the route along the header height (H) which controls mass, introduced into the header, to flow in the axial direction thereof has a length such that said axial flow is free from the deflected flow or stay of the mass, and wherein the inner surface of the first header has a tapered inner surface (16T) having a gradient ϑ falling within a range of 1° to 7°, said tapered inner surface (16T) being connected to the frusto-conical surface (16BS) of the first mass inlet port by a radiused portion (16R) bent outwardly.

2. The apparatus according to claim 1, characterised by the fact that the vertical angle (φ) of the frusto-conical surface is 18° to 22°.

## Patentansprüche

1. Hohlfaser-Stoffaustauschvorrichtung, umfassend ein Gehäuse (11), das einen ersten und einen zweiten Endabschnitt aufweist; ein Bündel (13) von Hohlfasern (12), das in dem Gehäuse untergebracht ist; erste und zweite Trennungselemente (14, 15), die das Hohlfaserbündel (13) am ersten bzw. zweiten Endabschnitt des Gehäuses derart halten, daß sich Öffnungen der Hohlfasern (12) an jeder der äußeren Endflächen der Elemente öffnen; ein erstes trichterartiges Kopfstück (16), das über dem ersten Ende des Gehäuses befestigt ist, so daß es sämtliche Öffnungen der Hohlfasern am ersten Ende des Gehäuses umschließt, und umfassend eine erste Stoffeinlaßöffnung (16B) mit kleinerem Durchmesser und einen Befestigungsabschnitt (16A) mit größerem Durchmesser, dessen unteres Ende (16AE) an das erste Trennungselement (14) angrenzt; ein zweites trichterartiges Kopfstück (17), das über dem zweiten Ende des Gehäuses befestigt ist, so daß es sämtliche Öffnungen der Hohlfasern am zweiten Ende des Gehäuses umschließt, und umfassend eine erste Stoffauslaßöffnung (17B) mit kleinerem Durchmesser und einen Befestigungsabschnitt (17A) mit größerem Durchmesser, dessen unteres Ende an das zweite Trennungselement angrenzt; und Einlaß- und Auslaßmittel (23, 24) für einen zweiten Stoff, die am Gehäuse in Verbindung mit einem Raum um die Hohlfasern vorgesehen sind; wobei die erste Stoffeinlaßöffnung eine kegelstumpfförmige Innenfläche (16BS) aufweist, wobei die Bedingung 0,8 ≦ H/D ≦ 1,2 erfüllt ist, wobei D den Innendurchmesser des Befestigungsabschnitts (16A) des ersten Kopfstücks (16) darstellt und H die Höhe zwischen dem unteren Ende (16AE) des Befestigungsabschnitts und dem äußersten Ende der ersten Stoffeinlaßöffnung (16B) des ersten Kopfstücks (16) darstellt, wobei die Strecke entlang der Kopfstückhöhe (H), die den in das Kopfstück eingeführten Stoff steuert, so daß er in dessen axialer Richtung strömt, eine Länge aufweist derart, daß die axiale Strömung frei von umgelenkter Strömung oder Stehenbleiben des Stoffes ist, und wobei die Innenfläche des ersten Kopfstücks eine sich verjüngende Innenfläche (16T) mit einer Steigung ϑ aufweist, die innerhalb eines Bereichs von 1° bis 7° abfällt, wobei die sich verjüngende Innenfläche (16T), die mit der kegelstumpfförmigen Fläche (16BS) der ersten Stoffeinlaßöffnung durch einen nach außen gebogenen, gerundeten Abschnitt (16R) verbunden ist.

2. Vorrichtung nach Anspruch 1, dadurch **gekennzeichnet**, daß der vertikale Winkel (Φ) der kegelstumpfförmigen Fläche 18° bis 22° ist.

## Revendications

1. Appareil de transfert de masse à fibres creuses, qui comprend une enceinte (11) avec des premières et seconde parties d'extrémité, un faisceau (13) de fibres creuses (12) logé dans l'enceinte, des premier et second éléments de séparation (14, 15) qui maintiennent respectivement le faisceau (13) de fibres creuses au niveau des première et seconde parties d'extrémité de l'enceinte de telle façon que les orifices des fibres creuses (12) s'ouvrent sur chaque face d'extrémité extérieure des éléments de séparation, un premier collecteur (16) en forme d'entonnoir placé sur la première extrémité de l'enceinte pour entourer tous les orifices des fibres creuses en la première extrémité de l'enceinte et comprenant un orifice (16B) d'entrée d'une première masse, de plus petit diamètre, et une partie formant raccord (16A) de plus grand diamètre dont l'extrémité inférieure (16AE) porte contre le premier élément de séparation (14), un second collecteur (17) en forme d'entonnoir placé sur la seconde extrémité de l'enceinte pour entourer tous les orifices des fibres creuses en la seconde extrémité de l'enceinte et comprenant un orifice (17B) de sortie de la première masse, de plus petit diamètre, et une partie formant raccord (17A) de plus grand diamètre dont l'extrémité inférieure porte contre le second élément de séparation, et des moyens d'entrée et de sortie (23, 24) d'une seconde masse, placés sur l'enceinte en communication avec un espace situé autour des fibres creuses,
dans lequel ledit orifice d'entrée de la première masse a une surface intérieure tronconique (16BS) et la condition 0,8 ≦ H/D ≦ 1,2, dans laquelle D représente le diamètre intérieur de la partie formant raccord (16A) du premier collecteur (16) et H la hauteur comprise entre l'extrémité inférieure (16AE) de la partie formant raccord et l'extrémité pointue de l'orifice d'entrée (16B) de la première masse du premier collecteur (16), est satisfaite,
dans lequel la route suivant la hauteur (H) du collecteur que suit la masse introduite dans le collecteur pour s'écouler dans la direction axiale de celui-ci a une longueur telle que ledit écoulement axial est exempt de déviation ou de stagnation de la masse,
et dans lequel la surface intérieure du premier collecteur comporte une surface intérieure conique (16T) ayant un gradient ϑ dans la fourchette de 1 à 7 °, ladite surface intérieure conique (16T) étant reliée à la surface tronconique (16BS) de l'orifice d'entrée de la première masse par une partie arrondie (16R) courbée vers l'extérieur.

2. Appareil selon la revendication 1, caractérisé par le fait que l'angle vertical (φ) de la surface tronconique vaut de 18 à 22°.
